(19) Europäisches Patentamt
European Patent Office
Office européen des brevets

(11) **EP 2 331 349 B1**

(12) **EUROPÄISCHE PATENTSCHRIFT**

(45) Veröffentlichungstag und Bekanntmachung des Hinweises auf die Patenterteilung:
**18.06.2014 Patentblatt 2014/25**

(21) Anmeldenummer: **09782425.4**

(22) Anmeldetag: **01.09.2009**

(51) Int Cl.:
*B60C 1/00* (2006.01)   *C08L 15/02* (2006.01)
*C08K 3/34* (2006.01)

(86) Internationale Anmeldenummer:
**PCT/EP2009/061238**

(87) Internationale Veröffentlichungsnummer:
**WO 2010/034592 (01.04.2010 Gazette 2010/13)**

(54) **KAUTSCHUKMISCHUNG MIT VERBESSERTER ERMÜDUNGSBESTÄNDIGKEIT**

RUBBER MIXTURE HAVING IMPROVED FATIGUE STRENGTH

MÉLANGE DE CAOUTCHOUC PRÉSENTANT UNE MEILLEURE RÉSISTANCE À LA FATIGUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 DE 102008049312
23.07.2009 DE 102009026229**

(43) Veröffentlichungstag der Anmeldung:
**15.06.2011 Patentblatt 2011/24**

(73) Patentinhaber: **Continental Reifen Deutschland GmbH
30165 Hannover (DE)**

(72) Erfinder:
• **WILKE, Thomas
31542 Bad Nenndorf (DE)**
• **MEISSNER, Steffi
31552 Rodenberg (DE)**
• **CONDE, Mario
77780 Bourron-Marlotte (FR)**

(74) Vertreter: **Finger, Karsten
Continental Aktiengesellschaft
Patentabteilung
Postfach 169
30001 Hannover (DE)**

(56) Entgegenhaltungen:
**EP-A- 1 195 402    EP-A- 1 726 620**

Printed by Jouve, 75001 PARIS (FR)

## Beschreibung

Die Erfindung betrifft eine Kautschukmischung, insbesondere für Fahrzeugluftreifen, wiederum insbesondere für den Innerliner eines Fahrzeugluftreifens, Gurte, Riemen und Schläuche.

Da die Fahreigenschaften eines Reifens, insbesondere Fahrzeugluftreifens, nicht alleine von der Kautschukzusammensetzung des Laufstreifens abhängig sind, sondern auch die Kautschukzusammensetzungen der einzelnen inneren Bauteile das Fahrverhalten des Reifen beeinflussen, werden auch dort hohe Anforderungen an die Zusammensetzung der Kautschukmischung gestellt.

So sorgt z.B. in schlauchlosen Fahrzeugluftreifen eine möglichst luftundurchlässige, radial innen angeordnete Innenseele, auch Innerliner oder Innenplatte genannt, dafür, dass die in den Reifen eingeführte Luft nicht entweicht, was zu einer deutlich negativen Beeinträchtigung der Fahrverhaltens führen würde. Damit allerdings die Innenseele luftdicht bleibt, muss sie auch eine gute Riss- und Ermüdungsbeständigkeit aufweisen, damit im Fahrbetrieb keine Risse entstehen, die die Luftdichtigkeit beeinträchtigen. Rissbeständigkeit und ein gutes Abriebsverhalten werden z.B. auch von der Kautschukmischung der Seitenwand gefordert.

Es wurden daher bereits vielfältige Versuche unternommen, die Eigenschaften der jeweiligen Kautschukmischungen durch die Variation der Polymerkomponenten, der Füllstoffe und der sonstigen Zuschlagstoffe positiv zu beeinflussen. Dabei muss man berücksichtigen, dass eine Verbesserung in der einen Eigenschaft oft eine Verschlechterung einer anderen Eigenschaft mit sich bringt. So ist eine Verbesserung der Rissbeständigkeit in der Regel mit einem erhöhten Wärmeaufbau, mit einem schlechteren Abriebsverhalten und oft auch mit einer Verschlechterung der Luftdurchlässigkeit verbunden.

Als Kautschuke für die Innenseele werden üblicherweise Chlorbutylkautschuk oder Brombutylkautschuk, gelegentlich im Verschnitt mit Naturkautschuk, eingesetzt. Diese Kautschuktypen weisen eine geringe Gasdurchlässigkeit auf. Durch die Zudosierung von voluminösen wenig bzw. nicht aktiven Füllstoffen und / oder Füllstoffen mit Schicht- oder Plättchenstruktur kann die Luftdichtigkeit weiter erhöht werden, gleichzeitig werden dadurch allerdings die Riss- und Ermüdungseigenschaften verschlechtert.

Zum Stand der Technik sind folgende Druckschriften zu würdigen:

DE 100 58 297 A1
DE 100 59 287 B4
DE 10 2005 044 999 A1
EP 0 178 079 A1
DE 10 2005 004 031 A1
DE 601 30 956 T2

Aus der DE 100 58 297 A1 und der DE 100 59 287 B4 ist jeweils die Verwendung von Schichtsilikaten bekannt, die mit Alkylammoniumionen modifiziert sind. Die entsprechenden Kautschukmischungen enthalten mindestens einen Covemetzer und zeichnen sich durch eine hohe Reißdehnung bei gleichzeitig gutem Spannungswert und gutem Weiterreißwiderstand aus.

Die DE 10 2005 044 999 A1 beschreibt eine Kautschukmischung, bevorzugt für den Innerliner von Fahrzeugluftreifen, die 50 bis 100 phr an Halobutylkautschuk, 5 bis 45 phr Polyisobutylen und 10 bis 120 phr Ruß enthält. Aufgabe der D3 ist eine reduzierte Weichmacherdiffusion und gute Druck- und Zugeigenschaften der Vulkanisate.

Die Offenbarung einer Kautschukmischung und eines Verfahrens zur Herstellung einer Kautschukmischung, welche als Kautschukkomponente Naturkautschuk, als Füllstoffe Kaolin und Metakaolin und Ruß und ein quaternäres Ammoniumsalz als Kupplungsagenz enthält, ist aus der EP 0 178 079 A1 bekannt.

Die DE 10 2005 004 031 A1 beschreibt eine Kautschukmischung, insbesondere für den Innerliner eines Fahrzeugluftreifens, der 40 bis 100 phr Halobutylkautschuk, maximal 60 phr eines weiteren Kautschuks und Talk enthält. Aufgabe der D5 ist eine hohe Luftdichtigkeit und eine verbesserte Ermüdungsbeständigkeit.

Die DE 601 30 956 T2 offenbart eine Kautschukzusammensetzung für eine Innenauskleidung eines Luftreifens, die einen in Lagen angeordneten oder plättchenförmigen Ton enthält und wobei die Innenauskleidungsgummischicht eine bestimmte Dicke aufweisen muss.

Die EP 1195402 A1 offenbart eine Kautschukmischung für Innerliner von Fahrzeugluftreifen, welche Tonminerale mit einem Schichtaufbau oder in Plättchenform enthält. Das Verhältnis zweier Größenparameter a/b (aspect ratio) dieser Minerale beträgt zwischen 3 und 30.

Die EP 1726620 A1 offenbart eine Kautschukmischung für Innerliner von Reifen, die Partikel des Minerals Glimmer mit einem Verhältnis von Länge zu Breite größer 50 enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Eine der Aufgaben der Erfindung ist es nun, eine Kautschukmischung insbesondere für Fahrzeugluftreifen, wiederum insbesondere für den Innerliner von Fahrzeugluftreifen, Gurte und Riemen, bereitzustellen, die sich durch verbesserte Ermüdungsbeständigkeit auszeichnet.

Gelöst wird diese Aufgabe durch eine Kautschukmischung mit folgender Zusammensetzung:

- 30 bis 100 phr zumindest eines Halobutylkautschuks und
- 0 bis 70 phr zumindest eines weiteren Dienkautschuks und
- 5 bis 100 phr einer Trockengemisch-Verbindung, die wenigstens 25% zumindest einer delaminierten Alumohydrosilikat-Modifikation enthält, wobei die delaminierte Alumohydrosilikat-Modifikation ein Zweischichtgitter aufweist, und wobei das Verhältnis Länge zu Breite der Partikel (L / B) der delaminierten Alumohydrosilikat-Modifikation zwischen 1,0 bis 2,8 beträgt, und
- 10 bis 100 phr zumindest eines Rußes mit einer STSA-Oberfläche gemäß ASTM-D 6556 von 10 bis 60 m$^2$/g und einer DBP-Zahl gemäß ASTM-D 2414 von 50 bis 160 mL/100 g und
- 3 bis 20 phr zumindest eines Mineralölweichmachers und
- weitere Zusatzstoffe.

Überraschenderweise wurde gefunden, dass durch eine Kautschukmischung mit obig beschriebener Zusammensetzung sich die die Ermüdungsbeständigkeit verbessern lässt und die Luftdichtigkeit auf einem ähnlichen Niveau verbleibt. Dadurch ist es möglich diesen Zielkonflikt zu entkoppeln. Wie bereits erwähnt gilt dies insbesondere für den Innerliner eines Fahrzeugluftreifens.

Der obige Effekt war nicht zu erwarten, da die Einmischung von plättchenförmigen Füllstoffen wie z.B. Talk in der Regel mit einer deutlichen Verschlechterung der Rissbeständigkeit der Vulkanisate einher geht und dadurch bedingt eine verringerte Ermüdungsbeständigkeit aufweist.

Weitere Anwendung findet die erfindungsgemäße Kautschukmischung in der Mischungsentwicklung für Riemen, Gurte, insbesondere für Fördergurte und Schläuche. Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher ist auch hier vor allem die Ermüdungsbeständigkeit bei gleich bleibenden weiteren viskoelastischen Eigenschaften, wie z.B. der Rückprallelastizität, zur Sicherung einer langen Lebensdauer von großer Bedeutung.

Für Schläuche ist die Dichtigkeit mit guter Ermüdungsbeständigkeit ganz allgemein von sehr großem Interesse. Bei Luftladeschläuchen insbesondere die Luftdichtigkeit bei gleichzeitig sehr geringer Rissbildungsneigung.

Eine weitere Aufgabe der Erfindung ist es, einen Fahrzeugluftreifen bereitzustellen, der sich durch verbesserte Ermüdungsbeständigkeit auszeichnet.

Gelöst wird diese Aufgabe dadurch, dass wenigstens ein inneres Bauteil des Fahrzeugluftreifens aus einer Kautschukmischung besteht, die folgende Zusammensetzung hat:

- 30 bis 100 phr zumindest eines Halobutylkautschuks und
- 0 bis 70 phr zumindest eines weiteren Dienkautschuks und
- 5 bis 100 phr einer Trockengemisch-Verbindung, die wenigstens 25% zumindest einer delaminierten Alumohydrosilikat-Modifikation enthält, wobei die delaminierte Alumohydrosilikat-Modifikation ein Zweischichtgitter aufweist und wobei das Verhältnis Länge zu Breite der Partikel (L / B) der delaminierten Alumohydrosilikat-Modifikation zwischen 1,0 bis 2,8 beträgt, und
- 10 bis 100 phr zumindest eines Rußes mit einer STSA-Oberfläche gemäß ASTM-D 6556 von 10 bis 60 m$^2$/g und einer DBP-Zahl gemäß ASTM-D 2414 von 50 bis 160 mL/100 g und
- 3 bis 20 phr zumindest eines Mineralölweichmachers und
- weitere Zusatzstoffe.

Bei den inneren Bauteilen handelt es sich um Seitenwand und / oder Innerliner und / oder Kernprofil und / oder Gürtel und / oder Schulter und / oder Gürtelprofil und / oder Squeege und / oder Karkasse und / oder Wulstverstärker und / oder Wulstprofil und / oder Hornprofil und / oder Bandage. Die Kautschukmischungen für diese Bauteile werden, wie in der Reifentechnologie üblich, auch als body compounds oder body-Mischungen bezeichnet

Bevorzugt ist es allerdings, wenn es sich bei dem Bauteil um den Innerliner handelt, da dieser im Wesentlichen für die Luftdichtigkeit eines Fahrzeugluftreifens verantwortlich ist.

Die Kautschukmischung enthält 30 bis 100 phr zumindest eines Halobutylkautschuks und 0 bis 70 phr zumindest eines weiteren Dienkautschuks. In einer besonders bevorzugten Ausführungsform enthält die Kautschukmischung 31 bis 100 phr zumindest eines Halobutylkautschuks und 0 bis 69 phr zumindest eines weiteren Dienkautschuks.

Als Halobutylkautschuk können alle der fachkundigen Person und in der Kautschukindustrie bekannten Halobutylkautschuke verwendet werden. Besonders hervorzuheben ist hier allerdings Chlorbutylkautschuk.

Der weitere Dienkautschuk ist dabei ausgewählt aus der Gruppe, bestehend aus Butylkautschuk, Polybutadienkautschuk, Styrol-Butadien-Copolymer, sythetischem Polyisopren, natürlichem Polyisopren, Styrol-Isopren-Copolymer, Styrol-Isopren-Butadien-Terpolymer, lösungspolymerisiertem Styrolbutadienkautschuk, emulsionspolymerisiertem Styrolbutadienkautschuk und / oder Ethylen-Propylen-DienKautschuk.

Insbesondere Styrol-Isopren-Butadien-Terpolymer, Butylkautschuk oder Ethylen-Propylen-Dien-Kautschuk kommen bei der Herstellung von technischen Gummiartikeln, wie Gurte, Riemen und Schläuche, zum Einsatz.

Der verwendete Dienkautschuk kann funktionalisiert sein. Es handelt sich um eine Funktionalisierung mit Hydroxylgruppen und / oder Epoxygruppen und / oder Siloxangruppen und / oder Aminogruppen und / oder Phtalocyaningruppen und/oder Aminosiloxangruppen und/oder Carboxylgruppen und / oder weiteren Funktionalisierungen, die mit eine chemische Bindung mit den verwendeten hellen Füllstoffen eingehen können.

Diese Funktionalisierungen sind dem Fachmann auch als Modifizierungen bekannt.

Der Dienkautschuk und / oder Halobutylkautschuk kann auch nicht funktionalisiert sein, so dass in der Kautschukmischung entweder alle Kautschuke, ein Teil der Kautschuke oder kein Kautschuk funktionalisiert ist.

Möglich ist es aber auch, dass noch weitere, bisher nicht erwähnte, Kautschuke in der Kautschukmischung eingemischt werden.

Ein wichtiger Bestandteil der erfindungsgemäßen Kautschukmischung ist das Vorhandensein von Ruß und zwar in Mengen von 10 bis 100 phr, bevorzugt in Mengen von 30 bis 100 phr.

Durch den Einsatz eines Rußes mit einer STSA-Oberfläche gemäß ASTM-D 6556 von 10, bevorzugt 15, bis 60 m$^2$/g und eine DBP-Zahl gemäß ASTM-D 2414 von 50, bevorzugt 55, bis 160 mL/100 g können die Riss- und die Ermüdungsbeständigkeit besonders stark verbessert werden.

Der Wert für STSA (statistical thickness surface area) liefert basierend auf der Stickstoffadsorptionsmessung die Oberfläche ohne Porositäten, während die DBP-Zahl gemäß ASTM D 2414 das spezifische Absorptionsvolumen eines Rußes oder eines hellen Füllstoffes mittels Dibutylphthalat bestimmt.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, welche beide Einfluss auf die Ermüdungsbeständigkeit der Kautschukmischung haben. Bevorzugt ist hierbei, wenn lediglich ein Russtyp in der jeweiligen Kautschukmischung verwendet wird, es können aber auch verschiedene Russtypen in die Kautschukmischung eingemischt werden.

Es ist aber durchaus möglich, dass zusätzlich zumindest eine Kieselsäure in der Kautschukmischung Verwendung findet.

Findet Kieselsäure in der erfindungsgemäßen Kautschukmischung Verwendung, so ist sie vollständig durch ein geeignetes Kupplungsagens an die Polymermatrix angebunden und in Mengen von 0 bis 100 phr, bevorzugt 0 bis 50 phr, vorhanden.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m$^2$/g und die CTAB-Oberfläche gemäß ASTM D 3765 als Maß für die äußere Oberfläche, die oftmals als die kautschukwirksame Oberfläche angesehen wird, in m$^2$/g angegeben.

Die DIN 66 131 entspricht hierbei der ISO 9277:1995 und beinhaltet die Bestimmung der spezifischen Oberfläche von Feststoffen durch Gasadsorption nach Brunauer, Emmett und Teller, welche auch als BET-Oberfläche oder BET-Zahl bezeichnet wird.

Bevorzugt werden Kieselsäuren mit einer Stickstoff-Oberfläche größer oder gleich 110 m$^2$/g, bevorzugt zwischen 115 und 300 m$^2$/g, besonders bevorzugt zwischen 150 und 280 m$^2$/g, und einer CTAB-Oberfläche zwischen 100 und 260 m$^2$/g, bevorzugt zwischen 140 und 200 m$^2$/g, eingesetzt.

Weiterhin ist es möglich, dass der Kautschukmischung noch andere, der fachkundigen Person bekannten, Füllstoffe, wie z.B. Kreide oder Talk, zugesetzt werden.

Falls ein Kupplungsagenz, in Form von Silan, Organosilan oder einer siliziumorganischen Verbindung, verwendet wird, so beträgt die Menge des Kupplungsagens 0 bis 10 phr, bevorzugt 0 bis 5 phr, besonders bevorzugt 0 bis 3 phr, insbesondere wenigstens 0,1 phr. Als Kupplungsagenzien können dabei alle dem Fachmann für die Verwendung in Kautschukmischungen Kupplungsagenzien verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801 A1, WO99/09036 A1, WO2002/048256 A2 und WO2006/015010 A2 zu finden sind.

Erfindungswesentlich ist, dass die Kautschukmischung 5 bis 100 phr, bevorzugt 10 bis 100 phr, besonders bevorzugt 20 bis 100 phr, ganz besonders bevorzugt 30 bis 100 phr und wiederum ganz besonders bevorzugt 40 bis 100 phr, wobei hier ganz besonders bevorzugt 50 bis 100 phr sind und wiederum ganz besonders bevorzugt 51 bis 100 phr sind, zumindest einer Trockengemisch-Verbindung enthält, die wenigstens 25% zumindest einer delaminierten Alumohydrosilikat-Modifikation enthält, wobei die delaminierte Alumohydrosilikat-Modifikation ein Zweischichtgitter aufweist und wobei das Verhältnis

Länge zu Breite der Partikel (L / B) der delaminierten Alumohydrosilikat-Modifikation zwischen 1,0 bis 2,8 beträgt. Die Prozentangabe bezieht sich dabei auf das Gesamtgewicht der Trockengemisch-Verbindung.

Das Zweischichtgitter der delaminierten Alumohydrosilikat-Modifikation ist bevorzugt ein dioktaedrisches Zweischichtgitter.

Die Trockengemisch-Verbindung hat einen Wassergehalt von 0 bis 2%, bevorzugt von 0 bis 1%. Dieser Wassergehalt ist im Wesentlichen, aber nicht ausschließlich, auf das Vorhandensein von Kristallwasser zurückzuführen.

In einer besonders bevorzugten Ausführungsform enthält die Trockengemisch-Verbindung zusätzlich wenigstens 40% eines di- oder trioktaedrischen Dreischichtsilikates aus der Gruppe der Phyllosilikate und / oder wenigstens 10% einer kristallinen Quarzmodifikation oder amorphen Quarz. Die Prozentangabe bezieht sich dabei auf das Gesamtgewicht der Trockengemisch-Verbindung.

Bezüglich der Klassifizierung der di-oder trioktaedrischen Dreischichtsilikate sei beispielhaft auf Matthes, Mineralogie, Springer-Lehrbuch, 3. Auflage, 1990, S. 129 ff, verwiesen.

Besonders gute Ermüdungsbeständigkeit zeigt sich, wenn die delaminierte Alumohydrosilikat-Modifikation eine CTAB-Oberfläche gemäß ASTM-D 3765 von 10 bis 40 $m^2$/g, eine BET-Oberfläche gemäß DIN66131 und DIN66132 von 10 bis 20 $m^2$/g, eine durchschnittliche Partikelgröße von 5 bis 15 $\mu$m und eine Partikelgröße $D_{50}$ von 3 bis 9 $\mu$m hat. Die Werte wurden mittels Laserdiffraktion bestimmt.

Aus Größe und Form der Partikel lässt sich der so genannte aspect ratio bestimmen.

Es hat sich als vorteilhaft erwiesen, wenn der aspect ratio, d.h. das Verhältnis Länge zu Breite der Partikel (L / B), bevorzugt zwischen 1,0 bis 2,0 und besonders bevorzugt zwischen 1,2 bis 1,5, beträgt. Zur Ermittelung des aspect ratios wurden die Partikel mit Hilfe eines automatischen Bildanalyseverfahrens mit CCD-Detektor, Sysmex FPIA-3000 der Firma Malvern Instruments Ltd., vermessen. Für weitere Details bezüglich der Messanalytik sei an dieser Stelle auf die entsprechenden Datenblätter und Informationen des genannten Herstellers verwiesen, welche zum Teil auch auf dessen Homepage verfügbar sind.

Weiterhin beträgt der Schichtindex (lamellarity index) der delaminierten Alumohydrosilikat-Modifikation 2 bis 15, bevorzugt 2 bis 10, besonders bevorzugt 2 bis 5. Der Schichtindex ist ein Maß für die Morphologie, d. h. für den Grad der Delaminierung (Entblätterung der Schichten); bei gleicher Feinheit der delaminierten Alumohydrosilikat-Modifikation (bestimmt durch Laserbeugung) zeigt ein höherer Schichtindex eine höhere Struktur an. Der Schichtindex wird ermittelt durch folgende Formel ermittelt:

$$\text{Schichtindex} = \frac{(\text{Partikelgröße aus Laserbeugung}) - (\text{Partikelgröße aus Sedimentation})}{(\text{Partikelgröße aus Sedimentation})}$$

Für die Ermittlung der Partikelgröße durch Sedimentation wurde ein SediGraph 5100 Partikelgrößenmessgerät der Firma Micromeritics Instruments, Deutschland verwendet.

Bevorzugt ist es, wenn es sich bei der delaminierten Alumohydrosilikat-Modifikation um delaminiertes $Al_2[(OH)_4/Si_2O_5]$ handelt.

In der Kautschukmischung ist zumindest ein Mineralölweichmacher enthalten, und zwar in Mengen von 3 bis 20 phr, bevorzugt in Mengen von 5 bis 20 phr.

Der Mineralölweichmacher ist ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

In einer besonders bevorzugten Ausführungsform hat der Weichmacher eine Viskosität bei 100°C zwischen 40 und 100 $mm^2$/s, eine Glasübergangstemperatur $T_g$ zwischen -40°C und -30°C und einen Gehalt an Aromaten zwischen 30 und 60 Gew.-%. Es können in der Kautschukmischung noch 0 bis 10 phr, bevorzugt 0,1 bis 5 phr, zumindest eines weiteren zusätzlichen Weichmachers vorhanden sein. Dieser weitere Weichmacher ist ausgewählt aus der Gruppe, bestehend aus synthetischen Weichmachern und / oder Fettsäuren und / oder Fettsäurederivaten und / oder Harzen und / oder Faktisse und / oder niedermolekularen Polymeren, so genannten Flüssigpolymeren und / oder Pflanzenölen.

Weiterhin enthält die Kautschukmischung noch weitere Zusatzstoffe.

Weitere Zusatzstoffe beinhaltet im Wesentlichen das Vernetzungssystem (Vernetzer, Beschleuniger und Verzögerer), Verstärkungsmittel, wie z.B. Kreide, Verstärkerharze, Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 bis 80 phr.

Weitere Zusatzstoffe beinhaltet auch eine Verbindung, die Zinkionen enthält. Hierbei handelt es sich bevorzugt um Zinkoxid in Mengen von 0,1 bis 10 phr, bevorzugt 0,2 bis 8 phr, besonders bevorzugt 0,2 bis 4 phr.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m$^2$/g auf. Es kann aber auch so genanntes nano-Zinkoxid mit einer BET-Oberfläche von 10 bis 60 m$^2$/g verwendet werden.

Der oder die Vulkanisationsbeschleuniger ist bzw. sind ausgewählt aus der Gruppe der Sulfenamidbeschleuniger und / oder Thiazolbeschleuniger und / oder Guanidinbeschleuniger und / oder Thiurambeschleuniger und / oder Mercaptobeschleuniger und / oder Dithiocarbamatbeschleuniger und /oder Aminbeschleuniger und / oder Thioharnstoffe und / oder Dithiophosphate.

Die Vulkanisation der Kautschukmischung wird vorzugsweise in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den der fachkundigen Person gebräuchlichen Mengen (0,4 bis 4 phr, Schwefel bevorzugt in Mengen von 1,5 bis 2,5 phr) der Kautschukmischung zugesetzt.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Die erfindungsgemäße Kautschukmischung bietet zusätzlich den Vorteil, dass durch die Verwendung der Trockengemisch-Verbindung der Füllgrad im Innenmischer erhöht werden kann. Dies führt zu einer Kapazitätserhöhung und somit zu einer Reduktion der Herstellungskosten.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder vor allem zur Herstellung einer Body-Mischung eines Reifens und zur Herstellung von Riemen, Gurten und Schläuchen, insbesondere zur Herstellung eines Flachriemens, Keilriemens, Keilrippenriemens, Zahnriemens, Luftladeschlauches, Kühlwasserschlauches oder Kraftfahrzeugschlauches, zu verwenden. Die Body-Mischung eines Reifens, beinhaltet Seitenwand, Innenseele, Kernprofil, Gürtel, Schulter, Gürtelprofil, Squeege, Karkasse, Wulstverstärker, Wulstprofil, Hornprofil und / oder Bandage.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1 bis 3 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Die Tabellen mit der Kennzeichnung "a" zeigen jeweils die Mischungszusammensetzung auf, während in den Tabellen mit der Kennzeichnung "b" die entsprechenden physikalischen Eigenschaften der Kautschukmischungen dargestellt sind.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:

- Shore-A-Härte bei Raumtemperatur gemäß DIN 53 505
- Rückprallelastizität bei Raumtemperatur gemäß DIN 53 512
- Spannungswert bei 100% Dehnung bei Raumtemperatur gemäß DIN 53 504
- Zugfestigkeit bei Raumtemperatur gemäß DIN 53 504
- Reißenergie bei Raumtemperatur gemäß DIN 53 448
- Luftpermeabilität gemäß DIN 53 536 bei 70 °C Lufttemperatur
- Monsanto Ermüdungstest (Fatigue to failure Tester) bei 136 % Dehnung und Raumtemperatur

# EP 2 331 349 B1

### Tabelle 1a

| Bestandteile | Einheit | V1 | V2 | E1 |
|---|---|---|---|---|
| Chlorbutylkautschuk | phr | 100 | 100 | 100 |
| Ruß A[a] | phr | 60 | - | - |
| Ruß B[b] | phr | - | 45 | 45 |
| Mineralöl[c] | phr | 14 | 12 | 12 |
| Talk[d] | phr | | 25 | |
| Trockengemisch-Verbindung[e] | phr | - | - | 25 |
| Harz | phr | 0,5 | 0,5 | 0,5 |
| ZnO | phr | 3 | 3 | 3 |
| Stearinsäure | phr | 2 | 2 | 2 |
| Verabeitungshilfsmittel | phr | 8,2 | 8,2 | 8,2 |
| DPG, CBS, Schwefel | phr | 1,8 | 1,8 | 1,8 |

[a]Ruß A: N 660
[b]Ruß B: Ecorax S 206, Fa. Evonik Industries AG
[c]RAE
[d]Talk, Mistron HAR, Rio Tinto Minerals
[e]Kaolin W, Fa. Erbslöh, Deutschland, aspect ratio: 1,35, $d_{50}$: 8,4 $\mu$m, lamellarity index: 2,3

### Tabelle 1 b

| Eigenschaften | Einheit | V1 | V2 | E1 |
|---|---|---|---|---|
| Zugfestigkeit | MPa | 7,1 | 6,6 | 6,4 |
| Reißdehnung | % | 760 | 920 | 1000 |
| Spannungswert 100 % | MPa | 0,9 | 1,0 | 0,75 |
| Härte | ShoreA | 46 | 44 | 40 |
| Rückprallelastizität | % | 9 | 9 | 9 |
| Permeationskoeffizient | $m^2/(Pa{*}s)$ | 5.3 | 3.6 | 4.6 |
| Monsanto Ermüdung | kZyklen | 50 | 375 | 730 |

### Tabelle 2a

| Bestandteile | Einheit | V3 | V4 | E2 | E3 | V5 | V6 | E4 | E5 |
|---|---|---|---|---|---|---|---|---|---|
| Chlorbutylkautschuk | phr | 100 | 100 | 100 | 100 | 100 | 100 | 100 | 100 |
| Ruß A[a] | phr | 60 | - | - | 45 | 45 | 45 | - | 45 |
| Ruß B[b] | phr | - | 45 | 45 | - | - | - | 45 | - |
| Mineralöl[c] | phr | 12 | 12 | 12 | 12 | 2 | 22 | 12 | 12 |
| Talk[d] | phr | - | 28 | - | - | - | - | - | - |
| Trockengemisch-Verbindung A[e] | phr | - | - | 28 | 28 | 28 | 28 | 40 | 40 |
| Harz | phr | 0,5 | 0,5 | 0,5 | 0,5 | 0,5 | 0,5 | 0,5 | 0,5 |
| ZnO | phr | 3 | 3 | 3 | 3 | 3 | 3 | 3 | 3 |
| Stearinsäure | phr | 2 | 2 | 2 | 2 | 2 | 2 | 2 | 2 |

(fortgesetzt)

| Bestandteile | Einheit | V3 | V4 | E2 | E3 | V5 | V6 | E4 | E5 |
|---|---|---|---|---|---|---|---|---|---|
| Verabeitungshilfsmittel | phr | 8,2 | 8,2 | 8,2 | 8,2 | 8,2 | 8,2 | 8,2 | 8,2 |
| DPG, MBTS, Schwefel | phr | 1,8 | 1,8 | 1,8 | 1,8 | 1,8 | 1,8 | 1,8 | 1,8 |
| [a]Ruß A: N 660<br>[b]Ruß B: Ecorax S 206, Fa. Evonik Industries AG<br>[c]RAE<br>[d]Talk, Mistron HAR, Rio Tinto Minerals<br>[e]Kaolin W, Fa. Erbslöh, Deutschland, aspect ratio: 1,35, $d_{50}$: 8,4$\mu$m, lamellarity index: 2,3 | | | | | | | | | |

**Tabelle 2b**

| Eigenschaften | Einheit | V3 | V4 | E2 | E3 | V5 | V6 | E4 | E5 |
|---|---|---|---|---|---|---|---|---|---|
| Zugfestigkeit | MPa | 8.1 | 6.5 | 7.0 | 7.6 | 7.7 | 7.4 | 6.6 | 6.9 |
| Reißdehnung | % | 887 | 851 | 975 | 910 | 779 | 1013 | 947 | 815 |
| Spannungswert 100% | MPa | 1.1 | 1.3 | 1.0 | 1.2 | 1.6 | 0.9 | 1.1 | 1.4 |
| Härte | ShoreA | 51 | 50 | 46 | 51 | 58 | 46 | 49 | 54 |
| Rückprallelastizität | % | 7 | 8 | 8 | 8 | 9 | 8 | 8 | 8 |
| Permeations-koeffizient | $m^2$/(Pa*s) | 5.0 | 3.5 | 3.8 | 4.3 | 3.4 | 4.6 | 3.9 | 3.4 |
| Monsanto Ermüdung | kZyklen | 204 | 134 | 291 | 161 | 103 | 266 | 416 | 138 |

**Tabelle 3a**

| Bestandteile | Einheit | V7 | V8 | E6 |
|---|---|---|---|---|
| Chlorbutylkautschuk | phr | 90 | 90 | 90 |
| Naturkautschuk | phr | 10 | 10 | 10 |
| Ruß A[a] | phr | 50 | - | - |
| Ruß B[b] | phr | - | 40 | 40 |
| Mineralöl[c] | phr | 10 | 12.5 | 12.5 |
| Talk[d] | phr | - | 25 | - |
| Kalziumkarbonat | phr | 30 | 30 | - |
| Trockengemisch-Verbindung A[e] | phr | - | - | 55 |
| ZnO | phr | 3 | 3 | 3 |
| Stearinsäure | phr | 1 | 1 | 1 |
| Verabeitungshilfsmittel | phr | 7,4 | 7,4 | 7,4 |
| DPG, MBTS, Schwefel | phr | 1,8 | 1,8 | 1,8 |
| [a]Ruß A: N 660<br>[b]Ruß B: Ecorax S 206, Fa. Evonik Industries AG<br>[c]RAE<br>[d]Talk, Mistron HAR, Rio Tinto Minerals<br>[e]Kaolin W, Fa. Erbslöh, Deutschland, aspect ratio: 1,35, $d_{50}$: 8,4$\mu$m, lamellarity index: 2,3 | | | | |

**Tabelle 3b**

| Eigenschaften | Einheit | V7 | V8 | E6 |
|---|---|---|---|---|
| Zugfestigkeit | MPa | 6.6 | 5.9 | 5.9 |
| Reißdehnung | % | 699 | 691 | 734 |
| Spannungswert 100 % | MPa | 1.0 | 1.3 | 1.3 |
| Härte | ShoreA | 47 | 49 | 49 |
| Rückprallelastizität | % | 11 | 11 | 11 |
| Permeationskoeffizient | $m^2/(Pa*s)$ | 5.7 | 4.7 | 4.2 |
| Monsanto Ermüdung | kZyklen | 126 | 73 | 140 |

Anhand der Tabelle1c ist zu erkennen, dass sich durch Hinzufügen von Talk, siehe V2, zu einer standardmäßig verwendeten Kautschukmischung für den Innerliner, siehe V1, in Kombination mit einem speziellen Rußtyp die Luftdichtigkeit, angezeigt durch den Permeationskoeffizienten, bei gleichzeitiger Optimierung der Ermüdungseigenschaften, dargestellt durch die Monsanto Ermüdung, verbessern lässt.

Die erfindungsgemäße Mischung E1 zeigt gegenüber V1 ebenfalls eine deutliche Verbesserung in der Luftdichtigkeit und verbleibt gegenüber V2 hinsichtlich der Luftdichtigkeit auf einem ähnlichen Niveau. Gegenüber V2 zeigt E1 allerdings eine absolut signifikante Erhöhung der Ermüdungsbeständigkeit auf, so dass die bereits beschriebenen Vorteile des Hinzufügens einer Trockengemisch-Verbindung A deutlich zu sehen sind.

Diese genannten Vorteile zeigen sich auch anhand der Versuchsergebnisse der Ausführungsbeispiele E2 bis E6 im Verhältnis zu den Vergleichsbeispielen V3 bis V8, welche in den Tabellen 2b und 3b dargestellt sind.

## Patentansprüche

1.  Kautschukmischung, **gekennzeichnet durch** folgende Zusammensetzung:

    - 30 bis 100 phr zumindest eines Halobutylkautschuks und
    - 0 bis 70 phr zumindest eines weiteren Dienkautschuks und
    - 5 bis 100 phr einer Trockengemisch-Verbindung, die wenigstens 25% zumindest einer delaminierten Alumohydrosilikat-Modifikation enthält, wobei die delaminierte Alumohydrosilikat-Modifikation ein Zweischichtgitter aufweist und wobei das Verhältnis Länge zu Breite der Partikel (L / B) der delaminierten Alumohydrosilikat-Modifikation zwischen 1,0 bis 2,8 beträgt, und
    - 10 bis 100 phr zumindest eines Rußes mit einer STSA-Oberfläche gemäß ASTM-D 6556 von 10 bis 60 $m^2/g$ und einer DBP-Zahl gemäß ASTM-D 2414 von 50 bis 160 mL/100 g und
    - 3 bis 20 phr zumindest eines Mineralölweichmachers und
    - weitere Zusatzstoffe.

2.  Kautschukmischung nach Anspruch 1, **dadurch gekennzeichnet, dass** die delaminierte Alumohydrosilikat-Modifikation eine CTAB-Oberfläche gemäß ASTM-D 3765 von 10 bis 40 $m^2/g$ hat.

3.  Kautschukmischung nach einem der Ansprüche 1 oder 2, **dadurch gekennzeichnet, dass** die delaminierte Alumohydrosilikat-Modifikation eine durchschnittliche Partikelgröße von 5 bis 15 $\mu$m hat.

4.  Kautschukmischung nach einem der Ansprüche 1 bis 3, **dadurch gekennzeichnet, dass** es sich bei der delaminierten Alumohydrosilikat-Modifikation um delaminiertes $Al_2[(OH)_4/Si_2O_5]$ handelt.

5.  Verwendung einer Kautschukmischung nach einem der Ansprüche 1 bis 4 zur Herstellung eines Reifens, Riemens, Gurtes oder Schlauches.

6.  Fahrzeugluftreifen, **dadurch gekennzeichnet, dass** wenigstens ein inneres Bauteil des Fahrzeugluftreifens aus einer Kautschukmischung besteht, die folgende Zusammensetzung hat:

    - 30 bis 100 phr zumindest eines Halobutylkautschuks und
    - 0 bis 70 phr zumindest eines weiteren Dienkautschuks und
    - 5 bis 100 phr einer Trockengemisch-Verbindung, die wenigstens 25% zumindest einer delaminierten Alumohydrosilikat-Modifikation enthält, wobei die delaminierte Alumohydrosilikat-Modifikation ein Zweischichtgitter aufweist und wobei das Verhältnis Länge zu Breite der Partikel (L / B) der delaminierten Alumohydrosilikat-Modifikation zwischen 1,0 bis 2,8 beträgt, und
- 10 bis 100 phr zumindest eines Rußes mit einer STSA-Oberfläche gemäß ASTM-D 6556 von 10 bis 60 m$^2$/g und einer DBP-Zahl gemäß ASTM-D 2414 von 50 bis 160 mL/100 g und
- 3 bis 20 phr zumindest eines Mineralölweichmachers und
- weitere Zusatzstoffe.

7. Fahrzeugluftreifen nach Anspruch 6, **dadurch gekennzeichnet, dass** es sich bei dem Bauteil um Seitenwand und / oder Innerliner und / oder Kernprofil und / oder Gürtel und / oder Schulter und / oder Gürtelprofil und / oder Squeege und / oder Karkasse und / oder Wulstverstärker und / oder Wulstprofil und / oder Hornprofil und / oder Bandage handelt.

8. Fahrzeugluftreifen nach Anspruch 7, **dadurch gekennzeichnet, dass** es sich bei dem Bauteil um den Innerliner eines Fahrzeugluftreifens handelt.

9. Fahrzeugluftreifen nach einem der Ansprüche 6 bis 8, **dadurch gekennzeichnet, dass** die delaminierte Alumohydrosilikat-Modifikation der Kautschukmischung eine CTAB-Oberfläche gemäß ASTM-D 3765 von 10 bis 40 m$^2$/g hat.

10. Fahrzeugluftreifen nach einem der Ansprüche 6 bis 9, **dadurch gekennzeichnet, dass** die delaminierte Alumohydrosilikat-Modifikation der Kautschukmischung eine durchschnittliche Partikelgröße von 5 bis 15 $\mu$m hat.

11. Fahrzeugluftreifen nach einem der Ansprüche 6 bis 10, **dadurch gekennzeichnet, dass** es sich bei der delaminierten Alumohydrosilikat-Modifikation der Kautschukmischung um delaminiertes Al$_2$[(OH)$_4$/Si$_2$O$_5$] handelt.

**Claims**

1. Rubber mixture, **characterized by** the following constitution:

   - from 30 to 100 phr of at least one halobutyl rubber, and
   - from 0 to 70 phr of at least one further diene rubber, and
   - from 5 to 100 phr of a dry-mix compound which comprises at least 25% of at least one delaminated form of aluminohydrosilicate, where the delaminated form of aluminohydrosilicate has a two-layer lattice and where the ratio of length to width of the particles (L/W) of the delaminated form of aluminohydrosilicate is from 1.0 to 2.8, and
   - from 10 to 100 phr of at least one carbon black with an STSA surface area to ASTM D6556 of from 10 to 60 m$^2$/g and with a DBP number to ASTM D2414 of from 50 to 160 mL/100 g, and
   - from 3 to 20 phr of at least one mineral-oil plasticizer, and
   - further additives.

2. Rubber mixture according to Claim 1, **characterized in that** the delaminated form of aluminohydrosilicate has a CTAB surface area to ASTM D3765 of from 10 to 40 m$^2$/g.

3. Rubber mixture according to either of Claims 1 and 2, **characterized in that** the delaminated form of aluminohydrosilicate has an average particle size of from 5 to 15 $\mu$m.

4. Rubber mixture according to any of Claims 1 to 3, **characterized in that** the delaminated form of aluminohydrosilicate involves delaminated Al$_2$[(OH)$_4$/Si$_2$O$_5$].

5. Use of a rubber mixture according to any of Claims 1 to 4 for the production of a tire, drive belt, belt or hose.

6. Pneumatic tire, **characterized in that** at least one inner component of the pneumatic tire is composed of a rubber mixture which has the following constitution:

   - from 30 to 100 phr of at least one halobutyl rubber, and
   - from 0 to 70 phr of at least one further diene rubber, and
   - from 5 to 100 phr of a dry-mix compound which comprises at least 25% of at least one delaminated form of aluminohydrosilicate, where the delaminated form of aluminohydrosilicate has a two-layer lattice and where the ratio of length to width of the particles (L/W) of the delaminated form of aluminohydrosilicate is from 1.0 to 2,8, and

- from 10 to 100 phr of at least one carbon black with an STSA surface area to ASTM D6556 of from 10 to 60 m$^2$/g and with a DBP number to ASTM D2414 of from 50 to 160 mL/100 g, and
- from 3 to 20 phr of at least one mineral-oil plasticizer, and
- further additives.

**7.** Pneumatic tire according to Claim 6, **characterized in that** the component is sidewall and/or inner liner and/or core profile and/or belt and/or shoulder and/or belt profile and/or squeegee and/or carcass and/or bead reinforcement and/or bead profile and/or flange profile and/or a solid tire.

**8.** Pneumatic tire according to Claim 7, **characterized in that** the component is the inner liner of a pneumatic tire.

**9.** Pneumatic tire according to any of Claims 6 to 8, **characterized in that** the delaminated form of aluminohydrosilicate of the rubber mixture has a CTAB surface area to ASTM D3765 of from 10 to 40 m$^2$/g.

**10.** Pneumatic tire according to any of Claims 6 to 9, **characterized in that** the delaminated form of aluminohydrosilicate of the rubber mixture has an average particle size of from 5 to 15 $\mu$m.

**11.** Pneumatic tire according to any of Claims 6 to 10, **characterized in that** the delaminated form of aluminohydrosilicate of the rubber mixture involves delaminated Al$_2$[(OH)$_4$/Si$_2$O$_5$].

**Revendications**

**1.** Mélange de caoutchouc **caractérisé par** la composition suivante :

de 30 à 100 phr d'au moins un caoutchouc à l'halogénobutyle,
de 0 à 70 phr d'au moins un autre caoutchouc diène,
de 5 à 100 phr d'un composé de mélange à sec qui contient au moins 25 % d'au moins une variante déstratifiée de silicate d'alumine hydraté, la variante déstratifiée de silicate d'alumine hydraté présentant une structure en deux couches et le rapport entre la longueur et la largeur des particules (L/B) de la variante déstratifiée de silicate d'alumine hydraté étant compris entre 1,0 et 2,8,
de 10 à 100 phr d'au moins un noir de carbone dont la surface STSA selon ASTM-D 6556 est de 10 à 60 m$^2$/g et dont l'indice DBP selon ASTM-D 2414 est de 50 à 160 ml/100 g,
de 3 à 20 phr d'au moins un plastifiant à huile minérale et
d'autres additifs.

**2.** Mélange de caoutchouc selon la revendication 1, **caractérisé en ce que** la variante déstratifiée de silicate d'alumine hydraté présente une surface CTAB selon ASTM-D 3765 de 10 à 40 m$^2$/g.

**3.** Mélange de caoutchouc selon l'une des revendications 1 ou 2, **caractérisé en ce que** la variante déstratifiée de silicate d'alumine hydraté se présente en particules d'une taille moyenne de 5 à 15 $\mu$m.

**4.** Mélange de caoutchouc selon l'une des revendications 1 à 3, **caractérisé en ce que** la variante déstratifiée de silicate d'alumine hydraté est un Al$_2$[(OH)$_4$/Si$_2$O$_5$] déstratifié.

**5.** Utilisation d'un mélange de caoutchouc selon l'une des revendications 1 à 4 pour la fabrication d'un bandage de roue, d'une courroie, d'une ceinture ou d'un tube flexible.

**6.** Bandage pneumatique pour roue de véhicule, **caractérisé en ce qu'**au moins un composant intérieur du bandage pneumatique pour roue de véhicule est constitué d'un mélange de caoutchouc qui présente la composition suivante :

de 30 à 100 phr d'au moins un caoutchouc à l'halogénobutyle,
de 0 à 70 phr d'au moins un autre caoutchouc diène,
de 5 à 100 phr d'un composé de mélange à sec qui contient au moins 25 % d'au moins une variante déstratifiée de silicate d'alumine hydraté, la variante déstratifiée de silicate d'alumine hydraté présentant une structure en deux couches et le rapport entre la longueur et la largeur des particules (L/B) de la variante déstratifiée de silicate d'alumine hydraté étant compris entre 1,0 et 2,8,
de 10 à 100 phr d'au moins un noir de carbone dont la surface STSA selon ASTM-D 6556 est de 10 à 60 m$^2$/g

et dont l'indice DBP selon ASTM-D 2414 est de 50 à 160 ml/100 g,
de 3 à 20 phr d'au moins un plastifiant à huile minérale et
d'autres additifs.

7.  Bandage pneumatique pour roue de véhicule selon la revendication 6, **caractérisé en ce que** le composant est une paroi latérale, une garniture intérieure, le profil d'âme, la ceinture, l'épaulement, le profil de ceinture, le "squeege", la carcasse, un renfort de bourrelet, un profilé de bourrelet, un profil de corne et/ou le bandage.

8.  Bandage pneumatique pour roue de véhicule selon la revendication 7, **caractérisé en ce que** le composant est la garniture intérieure d'un bandage pneumatique pour roue de véhicule.

9.  Bandage pneumatique pour roue de véhicule selon l'une des revendications 6 à 8, **caractérisé en ce que** la variante déstratifiée de silicate d'alumine hydraté du mélange de caoutchouc possède une surface CTAB selon ASTM-D 3765 de 10 à 40 m$^2$/g.

10. Bandage pneumatique pour roue de véhicule selon l'une des revendications 6 à 9, **caractérisé en ce que** la variante déstratifiée de silicate d'alumine hydraté du mélange de caoutchouc se présente en particules d'une taille moyenne de 5 à 15 $\mu$m.

11. Bandage pneumatique pour roue de véhicule selon l'une des revendications 6 à 10, **caractérisé en ce que** la variante déstratifiée de silicate d'alumine hydraté est un $Al_2[(OH)_4/Si_2O_5]$ déstratifié.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10058297 A1
- DE 10059287 B4
- DE 102005044999 A1
- EP 0178079 A1
- DE 102005004031 A1
- DE 60130956 T2
- EP 1195402 A1
- EP 1726620 A1
- DE 102005057801 A1
- WO 9909036 A1
- WO 2002048256 A2
- WO 2006015010 A2

**In der Beschreibung aufgeführte Nicht-Patentliteratur**

- **MATTHES.** Mineralogie. Springer-Lehrbuch, 1990, 129 ff